# EUROPEAN PATENT APPLICATION

(11) **EP 3 736 667 A1**
(43) Date of publication of application: **11.11.2020**
(21) Application number: 19173515.8
(22) Date of filing: 09.05.2019
(51) Int. Cl.: G06F 3/01, G06F 9/54, H04N 21/443, H04N 21/4788, H04N 21/81

(54) **VIRTUAL REALITY EQUIPMENT CAPABLE OF IMPLEMENTING A REPLACING FUNCTION AND A SUPERIMPOSITION FUNCTION AND METHOD FOR CONTROL THEREOF**

(71) Applicant: XRSpace CO., LTD., Taoyuan City 330 (TW)
(72) Inventor: Huang, Chi-Yang, 711 Tainan City (TW)
(74) Representative: Straus, Alexander

(57) **Abstract**

A computer-implemented method for controlling virtual reality equipment (100) includes the following steps. At first, a first application (101) sends a request for image related data. Then, a camera framework layer (105) sends an instruction for camera control in response to the request from the first application (101). Then, a camera hardware abstraction layer (106) responds to the instruction from the camera framework layer (105). Then, a control layer (104) controls the camera hardware abstraction layer (106) to send a control command to the second application (102) for image related data. Then, the second application (102) provides virtual reality data captured by a virtual camera in a virtual reality world as the image related data. The image data from the second application can be used by the first application e.g. for sharing with friends over a communications network.

## Description

### Field of the Invention

The present disclosure relates to virtual reality equipment, more particularly, to virtual reality equipment capable of implementing a replacing function and/or a superimposition function.

### Background of the Invention

Virtual reality (VR) enriches the user's experiences by VR equipment providing an immersive virtual environment with virtual objects (3D models, 2D textures, etc.). But current virtual reality systems suffer a problem that it is difficult for a user to share his VR images. For example, when a VR user makes a multimedia call to his friend and wants to share his VR image captured by a virtual camera in a VR world instead of a real scene image captured by a physical camera in a real environment, it is not easy to replace the real scene image with the VR image in multimedia applications.

Another problem is currently it is difficult to share VR data between different brands of virtual reality equipment. If the users want to share with each other their VR images in VR worlds, they may need to use the same brand of VR system. This problem limits the possibility of people sharing their VR experiences with each other.

Furthermore, these VR users need to wear VR equipment like a head mounted display, which is a complex system with lots of cameras and sensors. People who do not have VR equipment, for example, people which only have a smartphone, a notebook, a tablet or a personal computer, cannot experience the VR world. Therefore, a VR user cannot share her achievement in the VR world to another user who does not have VR equipment.

### Summary of the Invention

The present invention aims at providing virtual reality equipment and a computer-implemented method to control thereof for solving the aforementioned problem.

This is achieved by virtual reality equipment and a computer-implemented method according to the independent claims here below. The dependent claims pertain to corresponding further developments and improvements.

As will be seen more clearly from the detailed description following below, the computer-implemented method for controlling virtual reality equipment comprises five steps. At first, a first application sends a request for image related data. Then, a camera framework layer sends an instruction for camera control in response to the request from the first application. Then, a camera hardware abstraction layer responds to the instruction from the camera framework layer. Then, a control layer controls the camera hardware abstraction layer to send a control command to the second application for image related data. Then, the second application provides a virtual reality data captured by a virtual camera in a virtual world as the image related data.

The virtual reality equipment comprises a first application, a camera framework layer, a camera hardware abstraction layer and second application. The first application is configured to send a request for image related data. The camera framework layer is configured to respond to the request from the first application and send an instruction for camera control. The camera hardware abstraction layer is configured to respond to the instruction from the camera framework layer and send a control command to a second application for providing image related data. The second application is configured to provide virtual reality data captured by a virtual camera in a virtual reality world. The camera hardware abstraction layer includes a control layer configured to control the camera hardware abstraction layer to send the control command to the second application for image related data.

Another computer-implemented method comprises six steps. At first, a first application launched on the first mobile device and the second mobile device constructs a communication channel between the first mobile device and the second mobile and sends a request for image related data. Then, a camera framework layer of the first mobile device sends an instruction for camera control in response to the request from the first application. Then, a camera hardware abstraction layer of the first mobile device responds to the instruction from the camera framework layer of the first mobile device. Then, control layer of the first mobile device controls the camera hardware abstraction layer of the first mobile device to send a control command to a second application for the image related data. Then, the second application provides virtual reality data captured by a virtual camera in a virtual reality world as the image related data. Then, the first application receives the virtual reality data from the second application via the camera hardware abstraction layer of the first mobile device.

In summary, the present disclosure discloses the virtual reality equipment with the control layer, so that the virtual reality equipment is capable of implementing a replacing function and/or a superimposition function.

### Brief Description of the Drawings

In the following, the invention is further illustrated by way of example, taking reference to the accompanying drawings. Thereof
FIG.1 shows virtual reality equipment according to an embodiment of present disclosure;
FIG.2 is a flowchart of a method for controlling the virtual reality equipment shown in FIG.1 according to an embodiment of present disclosure;
FIG.3 shows displaying screens of two different mobile devices according to an embodiment of present disclosure;
FIG.4 shows virtual reality equipment and a mobile device according to an embodiment of present disclosure;
FIG.5 shows an image displayed on a smartphone according to an embodiment of present disclosure;
FIG.6 shows a first mobile device and a second mobile device according to an embodiment of present disclosure; and
FIG.7 and FIG.8 are a flowchart of a method of FIG.6 according to an embodiment of the present disclosure.

### Detailed Description

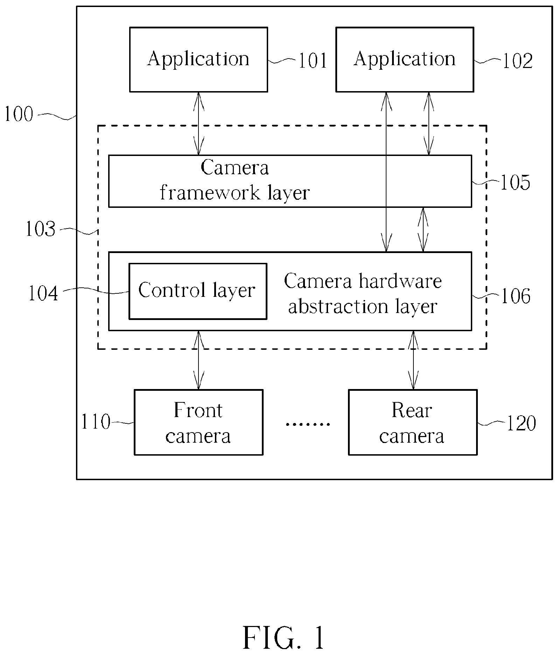

FIG.1 shows virtual reality equipment 100 according to an embodiment of present disclosure. The virtual reality equipment 100 comprises an application 101 and an application 102 running on an operating system (OS) 103. The virtual reality equipment 100 comprises physical cameras. In this embodiment, the physical cameras include at least one front camera 110 and at least one rear camera 120 for capturing real scene images. The operating system 103 comprises a control layer 104, a camera framework layer 105 and a camera hardware abstraction layer 106.

The application 101 can be a multimedia application such as Whatsapp, Facebook, Skype, etc. The application 102 provides virtual reality data captured by a virtual camera in a virtual reality world. The operating system 113 is system software that manages computer hardware and software resources and provides common services for computer programs. The control layer 104, camera framework layer 105 and the camera hardware abstraction layer 106 are program codes built into the operating system 113 and can be woken up when needed.

In detail, the camera framework layer 105 can provide instructions to the camera hardware abstraction layer 106 for camera control. The camera hardware abstraction layer 106 controls hardware which can operate the plurality of cameras 110 to 120 in response to the instructions. The control layer 104 can provide interfaces for the application 101 and the application 102. Further, the control layer 104 can control the camera hardware abstraction layer 106 to transmit or collect data to the application 101 and the application 102. The control layer 104 can be in a kernel of the operating system 103.

With the control layer 104, an image replacing function can be implemented. For example, the control layer 104 can control the camera hardware abstraction layer 106 to collect the virtual reality data from the application 102 instead of the real scene data from the physical camera as image related data required from the application 101. In this case, the virtual reality data can be a photo which captures an avatar of a user in a virtual world.

Also, with the control layer 104, an image superimposition function can be implemented. For example, the control layer 104 can control the camera hardware abstraction layer 106 to collect the virtual reality data from the application 102 and the real scene data from the physical camera. Then, the application 101 can superimpose objects of the virtual reality data into environment of the real scene data to generate the image related data; or, the application 101 can superimpose objects of the real scene data into environment of the virtual reality data to generate the image related data.

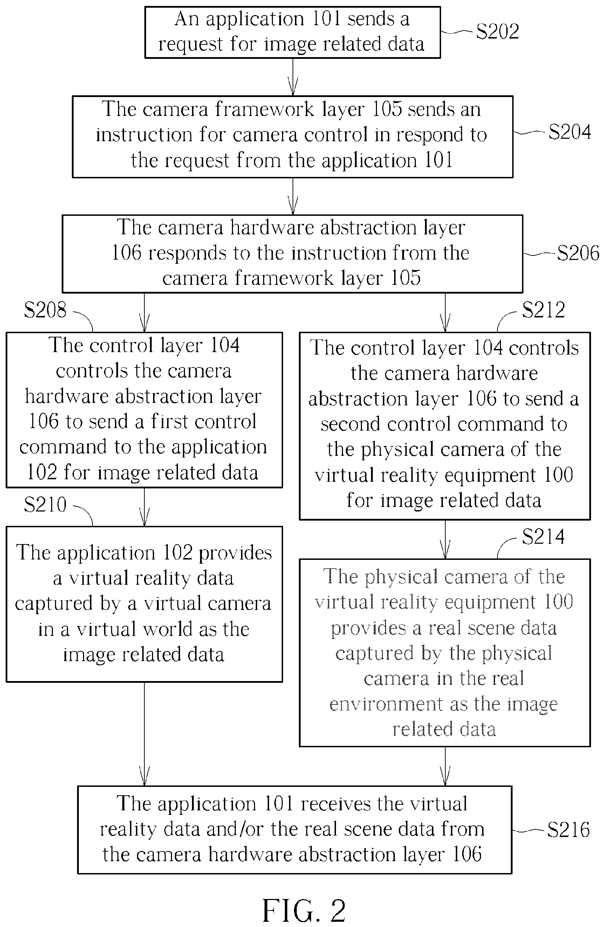

FIG.2 is a flowchart of a method 200 of the virtual reality equipment 100. The method 200 includes the following steps:

| | |
|---|---|
| S202: | an application 101 sends a request for image related data; |
| S204: | the camera framework layer 105 sends an instruction for camera control in response to the request from the application 101; |
| S206: | the camera hardware abstraction layer 106 responds to the instruction from the camera framework layer 105; |
| S208: | the control layer 104 controls the camera hardware abstraction layer 106 to send a first control command to the application 102 for image related data; |
| S210: | the application 102 provides a virtual reality data captured by a virtual camera in a virtual world as the image related data; |
| S212: | the control layer 104 controls the camera hardware abstraction layer 106 to send a second control command to the physical camera of the virtual reality equipment 100 for image related data; |
| S214: | the physical camera of the virtual reality equipment 100 provides a real scene data captured by the physical camera in the real environment as the image related data; and |
| S216: | the application 101 receives the virtual reality data and/or the real scene data from the camera hardware abstraction layer 106. |

In step S202, the application 101 sends a request for image related data. In one embodiment, the sending of the request is triggered by one or more user operations. The image related data can comprise at least one of image data, video data, camera pose data and camera time data, wherein the camera pose data and the camera time data record the pose and the time of photo shooting.

In step S204, the camera framework layer 105 sends the instruction for camera control in response to the request from the application 101. Then, in step S206, the camera hardware abstraction layer 106 responds to the instruction from the camera framework layer 105.

In steps S208 and S212, the method 200 discloses a function of the control layer 104. That is, the control layer 104 is capable of taking control of the camera hardware abstraction layer 106, such that the camera hardware abstraction layer 106 is controlled to send control commands to at least one target data resources for acquiring image related data.

In this embodiment, the number of the target data resources is two, that is, the control layer 104 controls the camera hardware abstraction layer 106 to send two control commands to the application 102 and a physical camera, and the present disclosure is not limited thereto. For example, the control layer 104 can control the camera hardware abstraction layer 106 to send only one control command to the application 102 or a physical camera. In this case, the steps S208, S210 or the steps S212, S214 will be omitted, and in step S214, the application 101 receives only one of the virtual reality data and the real scene data from the camera hardware abstraction layer 106. In the case of the control layer 104 sending only one control command to the application 102, the replacing function is implemented because of the application 102 only receive and display the virtual reality data, so that the real scene data is replaced by the virtual reality data.

In steps S210 and S214, the application 102 and the physical camera provide the virtual reality data and the real scene data as the image related data, wherein the virtual reality data is captured by the virtual camera in the virtual world and the real scene data is captured by the physical camera in the real environment. Similarly, each of the virtual reality data and the real scene data can comprise at least one of image data, video data, camera location data and camera time data, wherein the camera pose data and the camera time data of the virtual reality data record the pose and the time of photo shooting by the virtual camera in the virtual world.

In step S216, the application 101 receives the virtual reality data and/or the real scene data from the camera hardware abstraction layer 106. Therefore, the superimposition function can be performed when using both of the virtual reality data and the real scene data.

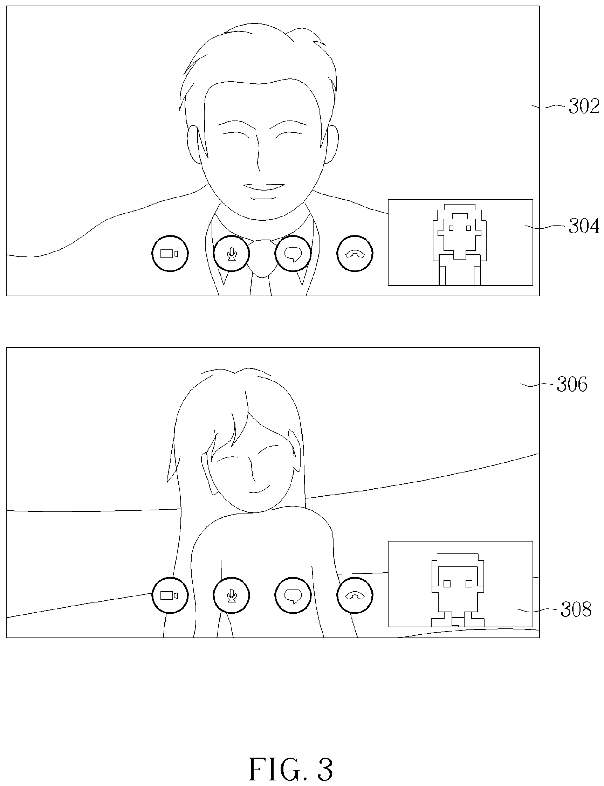

FIG.3 shows displaying screens of two different mobile devices according to an embodiment of present disclosure. The two different mobile devices launch the same application and communicate to each other. A displaying screen shown in the upper half of FIG.3 displays an image generated by virtual reality data and/or real scene data for a first user. Another displaying screen shown in the lower half of FIG.3 displays an image generated by virtual reality data and/or real scene data for a second user.

In FIG.3, each of the displaying screens shows an image in picture-in-picture mode. Main pictures 302, 306 of the images show other person and additional pictures 304, 308 of the images show user himself/herself. The images including the main pictures 302, 306 and the additional pictures 304, 308 can be generated by the virtual reality data and/or the real scene data.

In this embodiment, the two mobile devices are virtual reality equipment of the same brand or in different brands, and the present disclosure is not limited thereto. For example, one of the mobile devices can be virtual reality equipment and another one of the mobile devices is not virtual reality equipment. For example, another one of the mobile devices is a smartphone, a notebook, a tablet or a personal computer.

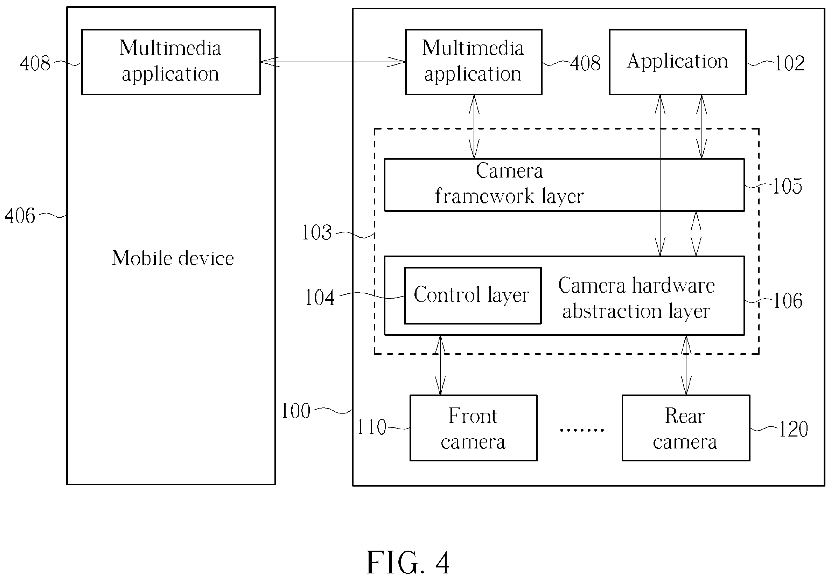

FIG.4 shows virtual reality equipment 100 and a mobile device 406 according to an embodiment of present disclosure. The virtual reality equipment 100 and the mobile device 406 launch the same multimedia application 408 and communicate to each other. The mobile device 406 can be virtual reality equipment or not.

Because the virtual reality equipment 100 and the mobile device 406 launch the same multimedia application 408 and communicate to each other, when the mobile device 406 is not virtual reality equipment, the virtual reality equipment 100 with the control layer 104 can share virtual reality data to the mobile device 406. Therefore, it is possible that a user of the mobile device 406 can experience a virtual reality world. For example, the virtual reality data can be transmitted to the mobile device 406 in real-time and the image generated by the virtual reality data shows 360 degrees field of view for the user of the mobile device 406 experiencing the virtual reality world.

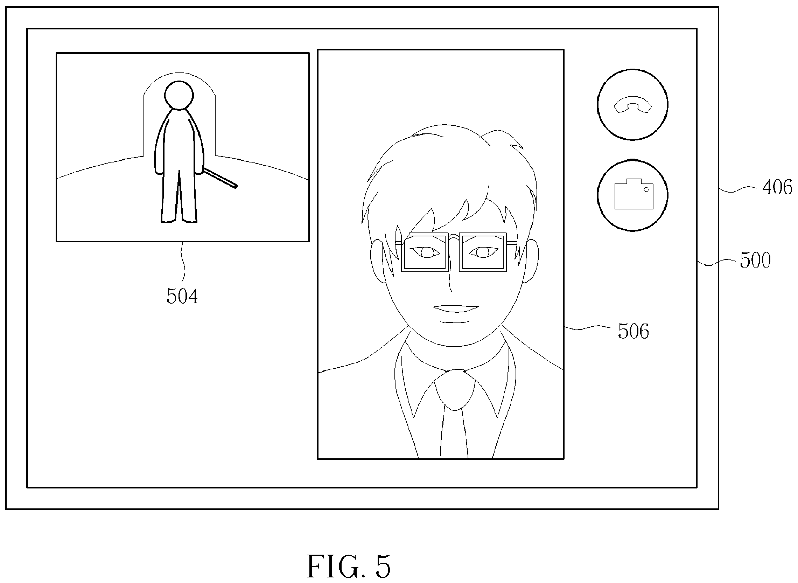

FIG.5 shows a display screen of the mobile device 406 displaying an image 500. Different from the images of the FIG.3, the image 500 of FIG.5 does not shown in picture-in-picture mode. The image 500 of FIG.5 shows two pictures 504, 506 separately, wherein both of the pictures 504, 506 are generated by the virtual reality data. In other embodiment, it is possible that a picture of the pictures is generated by the virtual reality data and another one of the pictures is generated by the real scene data. Both the images of FIG.3 and the image 500 of FIG.5 can be displayed by the virtual reality equipment 100 and the mobile device 406 when the virtual reality data and/or the real scene data is provided.

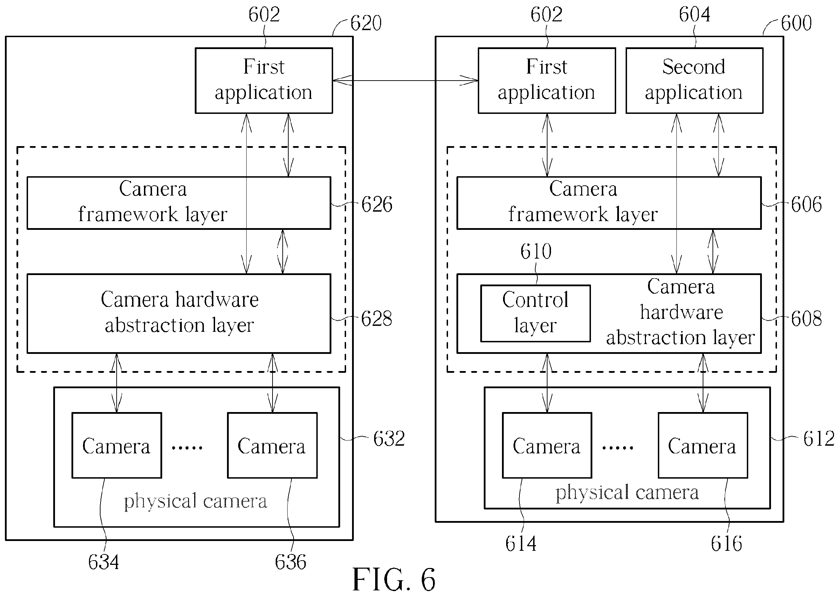

FIG.6 shows a first mobile device 600 and a second mobile device 620 according to an embodiment of present disclosure. The first mobile device 600 is virtual reality equipment. The second mobile device 620 is not virtual reality equipment.

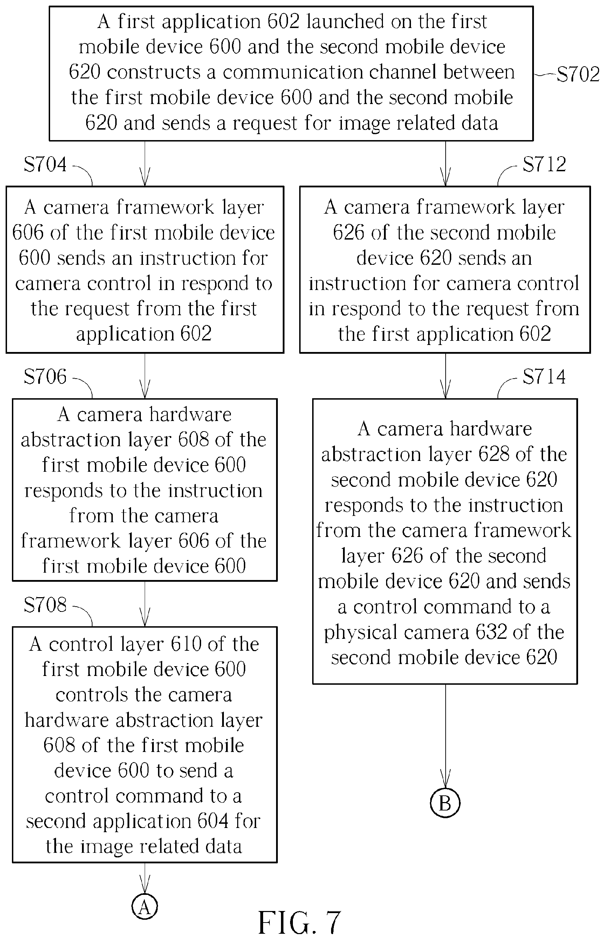

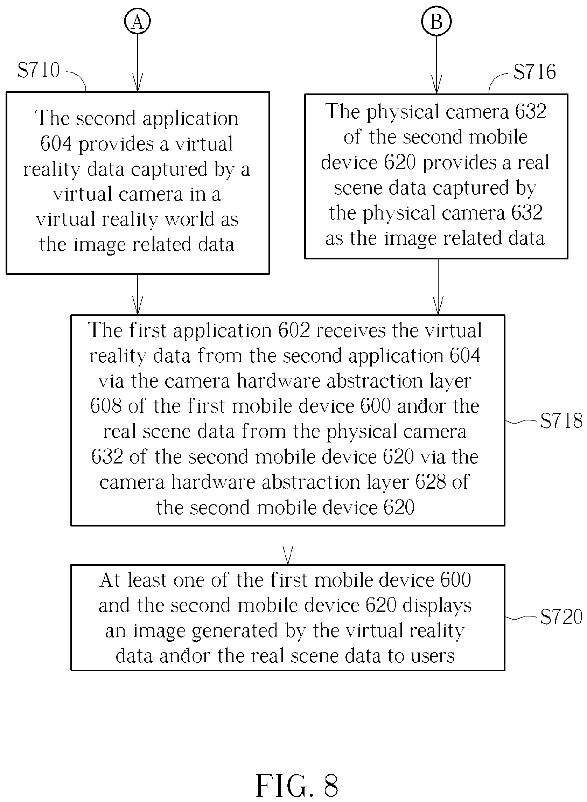

FIG.7 and FIG.8 are a flowchart of a method 700 of FIG.6 according to an embodiment of the present disclosure. The method 700 includes the following steps:

| | |
|---|---|
| S702: | a first application 602 launched on the first mobile device 600 and the second mobile device 620 constructs a communication channel between the first mobile device 600 and the second mobile 620 and sends a request for image related data; |
| S704: | a camera framework layer 606 of the first mobile device 600 sends an instruction for camera control in response to the request from the first application 602; |
| S706: | a camera hardware abstraction layer 608 of the first mobile device 600 responds to the instruction from the camera framework layer 606 of the first mobile device 600; |
| S708: | a control layer 610 of the first mobile device 600 controls the camera hardware abstraction layer 608 of the first mobile device 600 to send a control command to a second application 604 for the image related data; |
| S710: | the second application 604 provides virtual reality data captured by a virtual camera in a virtual reality world as the image related data; |
| S712: | a camera framework layer 626 of the second mobile device 620 sends an instruction for camera control in response to the request from the first application 602; |
| S714: | a camera hardware abstraction layer 628 of the second mobile device 620 responds to the instruction from the camera framework layer 626 of the second mobile device 620 and sends a control command to a physical camera 632 of the second mobile device 620; |
| S716: | the physical camera 632 of the second mobile device 620 provides real scene data captured by the physical camera 632 as the image related data; |
| S718: | the first application 602 receives the virtual reality data from the second application 604 via the camera hardware abstraction layer 608 of the first mobile device 600 and/or the real scene data from the physical camera 632 of the second mobile device 620 via the camera hardware abstraction layer 628 of the second mobile device 620; and |
| S720: | at least one of the first mobile device 600 and the second mobile device 620 displays an image generated by the virtual reality data and/or the real scene data to users. |

In step S702, the application 602 sends a request for image related data. In one embodiment, the sending of the request is triggered by one or more user operation of the first mobile device 600 and/or the second mobile device 620. For example, a user operation is that a user of the first mobile device 600 presses a virtual button on a display screen of the first mobile device 600 for making a call, and then, another user of the second mobile device 620 presses a physical button on a display screen of the second mobile device 620 for answering the call.

In steps S704 and S712, the camera framework layer 606 and the camera framework layer 626 send instructions for camera control in response to the request from the application 602 respectively. Then, in step S706 and S714, the camera hardware abstraction layer 608 and the camera hardware abstraction layer 628 respond to the instructions from the camera framework layer 606 respectively.

In step S708, similar to the step S208 of the method 200, the control layer 610 is capable of taking control of the camera hardware abstraction layer 608, such that the camera hardware abstraction layer 608 is controlled to send control commands to at least one target data resources for acquiring image related data. In this embodiment, the camera hardware abstraction layer 608 is controlled to send only one control command to the application 604 for acquiring the virtual reality data as the image related data. The physical camera 612 of the first mobile device 600, which includes one or more cameras 614, 616, does not receive the control command.

In steps S710 and S716, the second application 604 and the physical camera 632 provide virtual reality data captured by a virtual camera in a virtual reality world and real scene data captured by the physical camera 632 respectively. The physical camera 632 includes one or more cameras 634, 636.

In step S718, the application 602 receives the virtual reality data and/or the real scene data from the camera hardware abstraction layer 606 and the camera hardware abstraction layer 626. Then, in step S718, at least one of the first mobile device 600 and the second mobile device 620 displays an image generated by the virtual reality data and/or the real scene data to users.

Note that, since the camera hardware abstraction layer 608 is controlled to send only one control command to the application 604, a replacing function is implemented.

Further, in other embodiment, steps S710, S712, S716 can be omitted, and the first mobile device 600 and/or the second mobile device 620 can only display an image generated by the virtual reality data.

In summary, the present disclosure discloses virtual reality equipment with a control layer, so that the virtual reality equipment is capable of implementing a replacing function and/or a superimposition function.

## Claims

1. A computer-implemented method for controlling virtual reality equipment (100), **characterised by** comprising:
a first application (101) sending a request for image related data;
a camera framework layer (105) sending an instruction for camera control in response to the request from the first application (101);
a camera hardware abstraction layer (106) responding to the instruction from the camera framework layer (105);
a control layer (104) controlling the camera hardware abstraction layer (106) to send a control command to the second application (102) for image related data; and
the second application (102) providing virtual reality data captured by a virtual camera in a virtual world as the image related data.

2. The computer-implemented method of claim 1, **characterised by** further comprising:
the first application (101) receiving the virtual reality data from the camera hardware abstraction layer (106).

3. The computer-implemented method of claim 2, **characterised by** further comprising:
the first application (101) displaying an image generated by the virtual reality data to a user on the virtual reality equipment (100).

4. The computer-implemented method of any of the preceding claims, **characterised by** further comprising:
the control layer (104) controlling the camera hardware abstraction layer (106) to send another control command to a physical camera (110, 120) of the virtual reality equipment (100) for image related data;
the physical camera (110, 120) of the virtual reality equipment (100) providing real scene data captured by the physical camera (110, 120) in the real environment as the image related data; and
the first application (101) receiving the virtual reality data and the real scene data from the camera hardware abstraction layer (106).

5. The computer-implemented method of any of the preceding claims, **characterised by** further comprising: the first application (101) displaying an image generated by the virtual reality data and the real scene data to a user on the virtual reality equipment (100).

6. Virtual reality equipment (100), **characterised by** comprising:
a first application (101) configured to send a request for image related data;
a camera framework layer (105) configured to respond to the request from the first application (101) and send an instruction for camera control;
a camera hardware abstraction layer (106) configured to respond to the instruction from the camera framework layer (105) and send a control command to a second application (102) for providing image related data; and
the second application (102) configured to provide virtual reality data captured by a virtual camera in a virtual reality world;
wherein the camera hardware abstraction layer (106) includes a control layer (104) configured to control the camera hardware abstraction layer (106) to send the control command to the second application (102) for image related data.

7. The virtual reality equipment (100) of claim 6, **characterised in that** the first application (101) is further configured to receive the virtual reality data from the camera hardware abstraction layer (106).

8. The virtual reality equipment (100) of claim 7, **characterised in that** the first application (101) is further configured to display an image based on the virtual reality data to a user on the virtual reality equipment (100).

9. The virtual reality equipment (100) of any of claims 6-8, **characterised in that**:
the control layer (104) is further configured to control the camera hardware abstraction layer (106) to send another control command to a physical camera (110, 120) of the virtual reality equipment (100) for image related data;
the physical camera (110, 120) of the virtual reality equipment (100) is configured to provide real scene data captured by the physical camera (110, 120) in the real environment as the image related data; and
the first application (101) is further configured to receive the virtual reality data and the real scene data from the camera hardware abstraction layer (106).

10. The virtual reality equipment (100) of any of claims 6-9, **characterised in that** the first application (101) is further configured to display an image based on the virtual reality data and the real scene data to a user on the virtual reality equipment (100).

11. The virtual reality equipment (100) of any of claims 6-10, **characterised in that** the image related data comprises at least one of image data, video data, camera location data and camera time data, and the virtual reality data comprises at least one of image data, video data, camera location data and camera time data.

12. A computer-implemented method for controlling a first mobile device (600) and a second mobile device (620), **characterised by** comprising:
a first application (602) launched on the first mobile device (600) and the second mobile device (620) constructing a communication channel between the first mobile device (600) and the second mobile device (620) and sending a request for image related data;
a camera framework layer (606) of the first mobile device sending an instruction for camera control in response to the request from the first application (602);
a camera hardware abstraction layer (608) of the first mobile device (600) responding to the instruction from the camera framework layer (606) of the first mobile device (600);
a control layer (610) of the first mobile device (600) controlling the camera hardware abstraction layer (608) of the first mobile device (600) to send a control command to a second application (604) for the image related data;
the second application (604) providing virtual reality data captured by a virtual camera in a virtual reality world as the image related data; and
the first application (602) receiving the virtual reality data from the second application (604) via the camera hardware abstraction layer (608) of the first mobile device (600).

13. The computer-implemented method of claim 12, **characterised in that** the first mobile device (600) and the second mobile device (620) are virtual reality equipment.

14. The computer-implemented method of claim 12, **characterised in that** the first mobile device is virtual reality equipment and the second mobile device is not virtual reality equipment.

15. The computer-implemented method of any of claims 12-14, **characterised by** further comprising:
a camera framework layer (626) of the second mobile device (620) sending an instruction for camera control in response to the request from the first application (602);
a camera hardware abstraction layer (628) of the second mobile device (620) responding to the instruction from the camera framework layer (626) of the second mobile device (620) and sending a control command to a physical camera (632) of the second mobile device (620);
the physical camera (632) of the second mobile device (620) providing real scene data captured by the physical camera (632) as the image related data;
the first application (602) receiving the real scene data from the physical camera (632) of the second mobile (620) via the camera hardware abstraction layer (628) of the second mobile device (620); and
at least one of the first mobile device (600) and the second mobile device (620) displaying an image generated by the virtual reality data and the real scene data.
